# EUROPEAN PATENT APPLICATION

(11) **EP 2 378 399 A2**
(43) Date of publication of application: **19.10.2011**
(21) Application number: 10008818.6
(22) Date of filing: 24.08.2010
(51) Int. Cl.: G06F 3/041

(54) **Slim type touch device**

(30) Priority: 19.04.2010 TW 099112173
(71) Applicant: ETURBOTOUCH TECHNOLOGY INC., Taoyuan County (TW)
(72) Inventor: Wang, Kuei-Ching, Jhongli City Taoyuan County (TW); Lin, Hsing-Chiao, JhongLi City Taoyuan County (TW); Lin, Leng-Chieh, Yangmei Township Taoyuan County (TW); Tu, Ming-Tzu, Yangmei Township Taoyuan County (TW)
(74) Representative: Schaeberle, Steffen

(57) **Abstract**

A slim type touch device includes a touch panel (203), a display module (201), and a housing (205). The touch panel (203) and the display module (201) are installed in the housing (205). The touch panel (203) includes a plurality of sensing pads (303) formed on the bottom side of the touch panel (203) . The bottom side of the touch panel (203) is mounted on the display module (201) with the optical clear adhesive (207).

## Description

The present invention relates to a slim type touch device according to the pre-characterizing clause of claim 1.

Many electric products, such as mobile phone, digital camera, PDA, and portable computer, integrate the touch panel with the display module forming a touch device for providing the user wider visible area and more convenient operation in a limited volume. In addition, for preventing the surface of the touch device from scratches or dirt, the touch device has a protection film. For example, the protection film of the mobile phone is a transparent film with sufficient strength, and the thickness of the protection film is about 0.8-1.0mm. There are a few functional films formed on the top surface of the protection film, such as a filter, a polarizer, and a hard-wearing film, and the thickness is about 0.15mm. Further, the capacitance touch panel includes X-pads, Y-pads, substrate and a plurality of insulation layers, so the thickness is above the 1mm. The thickness of the optical clear adhesive (OCA) between the protection film and the touch panel is about 0.15mm, so the thickness of the combination is above 2.3mm. However, when thickness is above 1mm, the combination not only causes the difficulty of the mount structure and profile design, but influences the transmittance resulting in cloud images or dark images.

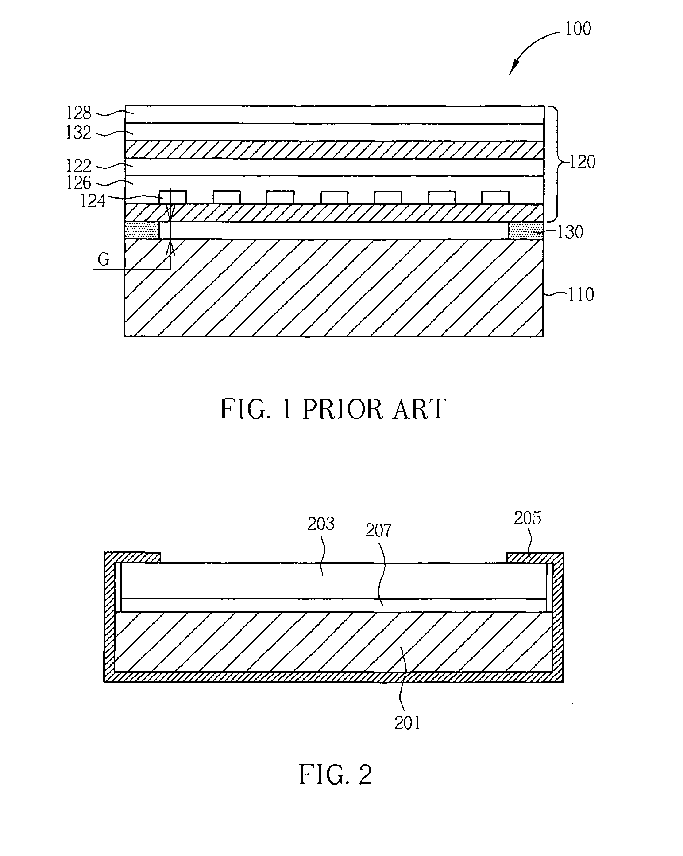

Please refer FIG.1. FIG.1 is a schematic view of a touch device according to the prior art. The touch device 100 includes a display module 110 and a touch panel 120. The touch panel 120 is a capacitance touch panel, including a plurality of upper sensing pads 122, a plurality of lower sensing pads 124, and a dielectric layer 126 between the upper sensing pads 122 and the lower sensing pads 124. The protection layer 128 is mounted on the substrate of the upper sensing pads 122 with the OCA 132. The touch panel 120 is mounted on the display module 110 with double-sided tape 130, so the touch device 100 has touch control and display functions. However, the double-sided tape 130 is applied to the edge of the display module 110 and the touch panel 120, so there is a gap G between the display module 110 and the touch panel 120. When the light beam passes through the gap G, the display module 110 may have light leak or the transmittance decrease because of the refraction between the different mediums resulting in the lower quality of the image. In addition, the combination of the touch panel 120 and the display module 110 causes the thickness unable to decrease, which cannot satisfy the requirement of the slim type electrical devices.

This in mind, the present invention aims at providing a slim type touch device for overcoming these problems.

This is achieved by a slim type touch device according to claim 1. The dependent claims pertain to corresponding further developments and improvements.

As will be seen more clearly from the detailed description following below, the claimed slim type touch device includes a display module and a substrate that has a plurality of sensing pads forming on the bottom side of the substrate, and the bottom side of the substrate being mounted on the display module with an optical clear adhesive.

In the following, the invention is further illustrated by way of example, taking reference to the accompanying drawings. Thereof
FIG.1 is a schematic view of a touch device according to the prior art,
FIG.2 is a schematic view of the slim type touch device according to the present invention,
FIG.3 is a lateral view of the touch panel,
FIG.4 is a lower view of the touch panel,
FIG.5 is a schematic view of the first embodiment of the sensing pads of the touch panel, and
FIG.6 is a schematic view of the second embodiment of the sensing pads of the touch panel.

Please refer to FIG.2. FIG.2 is a schematic view of the slim type touch device according to the present invention. The touch device comprises a display module 201, a touch panel 203, and a housing 205. The display module 201 and the touch panel 203 are installed in the housing 205. The display module 201 comprises a liquid crystal display (LCD) or an organic light-emitting display (OLED). For example, LCD comprises a TFT substrate, a liquid crystal layer, a color filter, and a backlight module. The TFT substrate and the color filter have a polarizer formed on the outside surface respectively. The LCD controls the liquid crystal rotating to change the transmittance, and generates the different colors by the color filter. The touch panel 203 comprises a plurality of sensing pads formed on the bottom side of a substrate. The touch panel 203 is mounted on the display module 201 with the optical clear adhesive (OCA) 207. Thus, the plurality of sensing pads of the touch panel 203 can detect the touch and move of the fingers or touch pens.

In addition, the touch panel 203 has the functions of the decoration film or protection film. The material of the substrate of the touch panel 203 is poly carbonate (PC), ARTON, polyether surlfone (PES), ZEONOR, tri-acetyl Cellulose (TAC), polyethylene terephthalate (PET), or polymethyl methacrylate (PMMA). According to the present invention, the touch panel 203 plays the roles of the decoration film and protection film. The plurality of sensing pads is formed on the bottom side of the touch panel 203. The OCA 207 is spread overall between the touch panel 203 and the display module 201 to mount the touch panel 203 on the display module 201. In this way, there is no air gap between the touch panel 203 and the display module 201, so the light leak and the quality of the image are improved. The touch device of the present invention has three layers, comprising a touch panel, an OCA, and a display module. Compared with the prior art, the conventional touch device has five layers, comprising a protection layer, an OCA, a sensing layer, a double-sided tape, and a display module. Therefore, the touch device of the present invention can reduce the thickness of the touch device, improve the optical performance, apply in a soft or hard display device, and lower the cost.

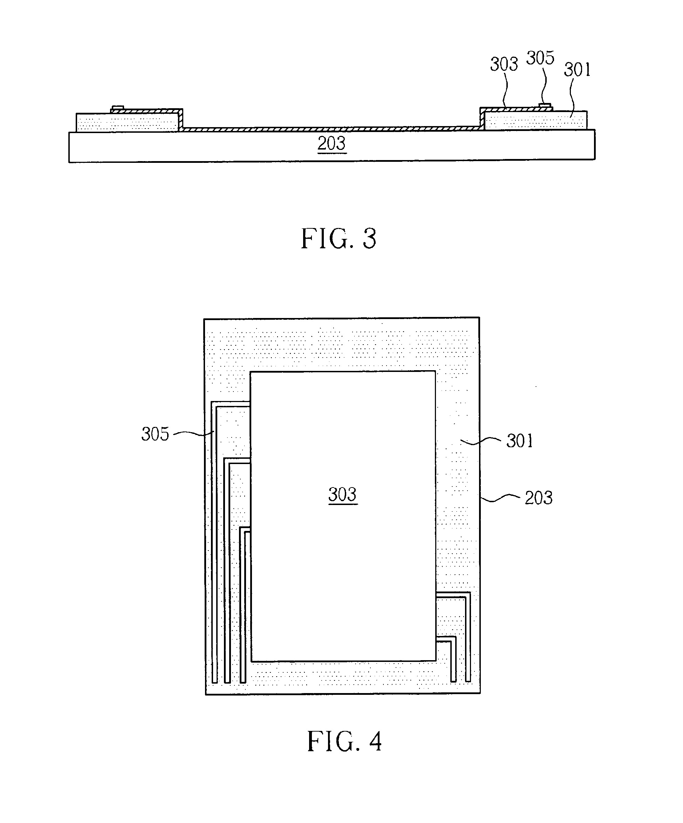

Please refer to FIG. 3. FIG. 3 is a lateral view of the touch panel 203. The bottom side of the touch panel 203 comprises a frame pattern 301, a plurality of sensing pads 303, and a plurality of conductive wires 305. In the embodiment of the present invention, the sensing pads are transparent electrodes made of nano silver materials, carbon nano tube (CNT) materials, or conductive polymer materials. The plurality of conductive wires is made of metal materials. The frame pattern 301 is processed by ink printing forming the decoration pattern. Compared to the prior art, the conventional touch panel has five or three layers. Five layers of the touch panel are a protection layer, an OCA, an upper sensing layer, a dielectric layer, and a lower sensing layer. Three layers of the touch panel are a protection layer, an OCA, and a sensing layer. The touch panel of the present invention comprises a sensing layers formed on the bottom side of the substrate, and the top side of the substrate can be a protection layer, so the touch panel only has one layer. Therefore, the touch device of the present invention can reduce the thickness of the touch device and improve the optical performance. In addition, the transparent electrodes made of nano silver materials, carbon nano tube (CNT) materials, or conductive polymer materials can improve the bad coverage resulting from the indium tin oxide (ITO) sputtering process.

Please refer to FIG.4. FIG.4 is a lower view of the touch panel 203. The plurality of sensing pads 303 is formed on the bottom side of the substrate. The plurality of sensing pads 303 is unnecessary to cross in X direction and Y direction. Basically, the plurality of sensing pads 303 are arranged regularly on the substrate in a symmetrical and repeated pattern. Each sensing pad 303 is electrically connected to a conductive wire for receiving a control signal. Compared to the prior art, the conventional touch panel uses two sensing layers crossing in X direction and Y direction. The first way is that two sensing layers are formed on two substrates respectively or on the two sides of one substrate. The second way is that two sensing layers are formed on the same side of the substrate and the sensing pads in X direction and Y direction are bridged for isolation.

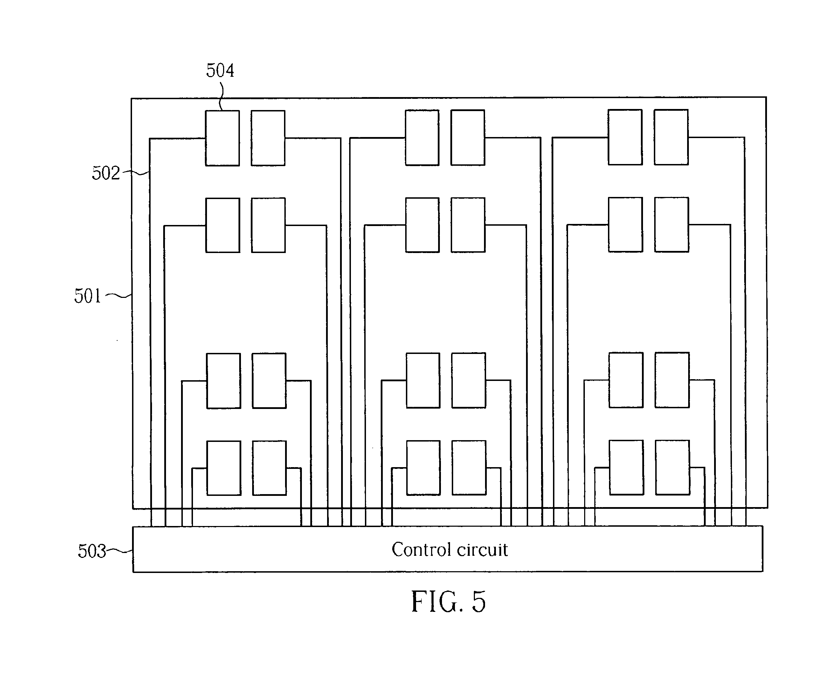

Please refer to FIG.5. FIG.5 is a schematic view of the first embodiment of the sensing pads of the touch panel. The touch panel 501 comprises a plurality of sensing pads 504 and a plurality of conductive wires 502. Each sensing pad 504 is electrically connected to the control circuit 503 through one conducting wire 502. When the plurality of sensing pads 504 is touched generating sensing signals, the control circuit 503 can calculate the location of the touch point according to the intensity of the sensing signals.

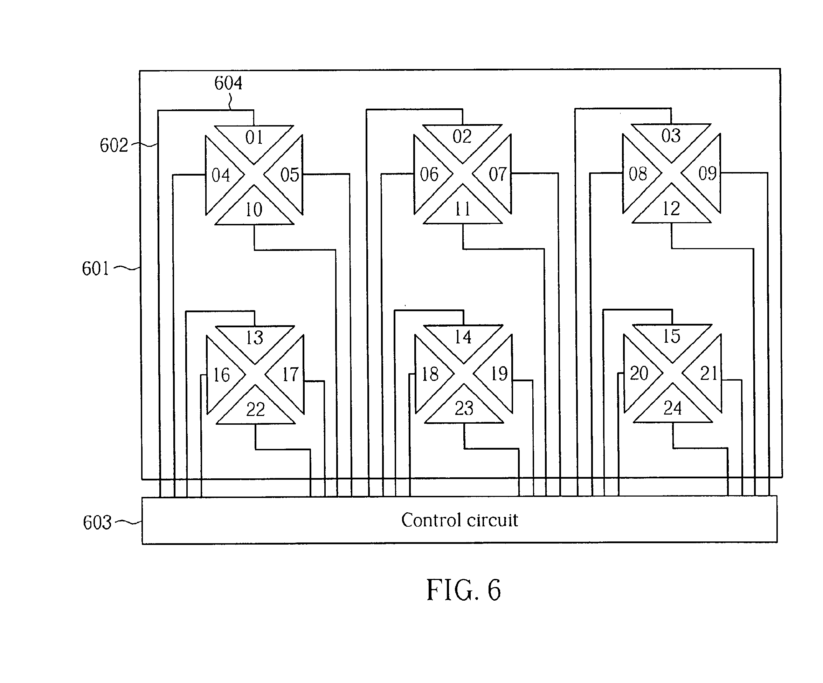

Please refer to FIG.6. FIG.6 is a schematic view of the second embodiment of the sensing pads of the touch panel. The touch panel 601 comprises a plurality of sensing pads 604 and a plurality of conducting wires 602. The plurality of sensing pads 604 is electrically connected to the control circuit 603 through the plurality of conducting wires 602, and each conducting wire 602 is electrically connected to a sensing pad 604. When the sensing pads 604 are touched generating sensing signals, the touched sensing pads 604 transmit the sensing signals to the control circuit 603 through their own conducting wires 602 respectively. The control circuit 603 can calculate the location of the touch point according to the intensity of the sensing signals. In this embodiment, the sensing pads 01-24 are triangular, and every four triangular sensing pads 604 arranged forming a square. For example, the triangular sensing pads 01, 04, 05, and 10 form a square. Thus, two adjacent sensing pads 604 can generate the sensing signals easier in the X-axis and Y-axis, so the sensitivity of the touch device 600 is improved. For example, the triangular sensing pads 01, 05 can generate sensing signals both in the X-axis and Y-axis. In addition, every four triangular sensing pads 604 arranged forming a square makes the plurality of sensing pads 604 close on the touch panel 601. Therefore, the triangular sensing pads in this embodiment can increase the sensitivity and smooth operation.

In conclusion, the present invention provides a slim type touch device. The touch device comprises a touch panel, a display module, and a housing. The touch panel and the display module are installed in the housing. The touch panel comprises a plurality of sensing pad formed on the bottom side of the touch panel. The bottom side of the touch panel is mounted on the display module with the optical clear adhesive. The decoration pattern is printed on the bottom side of the substrate. The top side of the substrate can be a protection layer. Thus, the touch panel combines the sensing layer, protection layer, and decoration layer in one layer. In addition, the optical clear adhesive is spread overall between the touch panel and the display module for reducing the thickness of the touch device and improving the optical performance.

For completeness, various aspects of the invention are set out in the following numbered clauses:
Clause 1: A touch device, comprising:
   a display module;
   a substrate, comprising a plurality of sensing pads forming on the bottom side of the substrate, the bottom side of the substrate being mounted on the display module with an optical clear adhesive; and
   a housing, for containing the display module and the substrate.
Clause 2: The touch device of clause 1, wherein the material of the substrate is poly carbonate (PC), ARTON, polyether surlfone (PES), ZEONOR, tri-acetyl Cellulose (TAC), polyethylene terephthalate (PET), or polymethyl methacrylate (PMMA).
Clause 3: The touch device of clause 1, wherein the optical clear adhesive is spread overall between the substrate and the display module.
Clause 4: The touch device of clause 1, further comprising a plurality of conductive wires, each conductive wire electrically connected to one sensing pad.
Clause 5: The touch device of clause 1, further comprising a control circuit electrically connected to the plurality of conductive wires, for calculating a location of a touch point according to the intensity of a sensing signal generated when the plurality of sensing pads is touched. Clause 6: The touch device of clause 1, wherein the plurality of sensing pads is the plurality of rectangular sensing pads formed on the substrate, every four rectangular sensing pads forming a rectangle.
Clause 7: The touch device of clause 1, wherein the plurality of sensing pads is the plurality of triangular sensing pads formed on the substrate, every four triangular sensing pads forming a square.
Clause 8: The touch device of clause 1, wherein the sensing pads are transparent electrodes made of nano silver materials, carbon nano tube (CNT) materials, or conductive polymer materials.
Clause 9: The touch device of clause 1, further comprising a frame pattern formed on the bottom side of the substrate.
Clause 10: The touch device of clause 1, wherein the display module is a liquid crystal display (LCD) or an organic light-emitting display (OLED).

All combinations and sub-combinations of the above-described features also belong to the invention.

## Claims

1. A slim type touch device, comprising:
a display module (201);
a housing (205), for containing the display module (201) ;
and
**characterized by**:
a substrate (203), comprising a plurality of sensing pads (303) forming on the bottom side of the substrate (203), the bottom side of the substrate (203) being mounted on the display module (201) with an optical clear adhesive (207).

2. The slim type touch device of claim 1, **characterized in that** the material of the substrate (203) is poly carbonate (PC), ARTON, polyether surlfone (PES), ZEONOR, tri-acetyl Cellulose (TAC), polyethylene terephthalate (PET), or polymethyl methacrylate (PMMA).

3. The slim type touch device of claim 1, **characterized in that** the optical clear adhesive (207) is spread overall between the substrate (203) and the display module (201) .

4. The slim type touch device of claim 1, further **characterized by** a plurality of conductive wires (305), each conductive wire electrically connected to one sensing pad.

5. The slim type touch device of claim 1, further **characterized by** a control circuit (503, 603) electrically connected to the plurality of conductive wires (502, 602), for calculating a location of a touch point according to the intensity of a sensing signal generated when the plurality of sensing pads (504, 604) is touched.

6. The slim type touch device of claim 1 or 4, **characterized in that** the plurality of sensing pads is the plurality of rectangular sensing pads (504) formed on the substrate (501), every four rectangular sensing pads forming a rectangle.

7. The slim type touch device of claim 1 or 4, **characterized in that** the plurality of sensing pads is the plurality of triangular sensing pads (604) formed on the substrate (601), every four triangular sensing pads forming a square.

8. The slim type touch device of claim 1, **characterized in that** the sensing pads (303) are transparent electrodes made of nano silver materials, carbon nano tube (CNT) materials, or conductive polymer materials.

9. The slim type touch device of claim 1, further **characterized by** a frame pattern (301) formed on the bottom side of the substrate.

10. The slim type touch device of claim 1, **characterized in that** the display module (201) is a liquid crystal display (LCD) or an organic light-emitting display (OLED).
